# EUROPEAN PATENT APPLICATION

(11) **EP 4 467 769 A1**
(43) Date of publication of application: **27.11.2024**
(21) Application number: 23174806.2
(22) Date of filing: 23.05.2023
(51) Int. Cl.: E21D 21/00

(54) **A ROCK BOLT**

(71) Applicant: Sandvik Mining and Construction Australia (Production/Supply) Pty Ltd, Milton QLD 4064 (AU)
(72) Inventor: WEAVER, Steven, Heatherbrae, 2324 (AU); RATAJ, Mietek, Charlestown, 2290 (AU)
(74) Representative: Sandvik

(57) **Abstract**

A rock bolt 40 comprising: an elongate, generally circular tube 41, the tube having a leading end 13 and a trailing end (42), an expander mechanism 15 disposed within the tube in the region of the leading end 13, an elongate tendon 44 disposed longitudinally within the tube 41 and in connection at or towards a first end of the tendon 44 with the expander mechanism 15 and in connection at or towards a second and opposite end of the tendon 44 with an anchor arrangement 46 positioned at the trailing end 42 of the tube 41, the tendon 44 having a projection 56 that extends radially and that is positioned between the expander mechanism 15 and the anchor arrangement 46 and the tube 41 having a catch 58, the catch 58 having an opening 62 through which the tendon 44 extends and the projection 56 having a radial dimension too great to pass through the opening 62, wherein the catch 58 is fixed in position within the tube 41 between the tendon projection 56 and the trailing end 42 of the tube 41.

## Description

### Technical Field

The present invention relates to a rock bolt for use in rock strata or a rock body for the purpose of stabilising the strata or body against fracture or collapse. This is sometimes termed "ground support". Such rock bolts are used extensively in the mining, tunnelling and excavation industries for supporting rock walls against fracture or collapse.

### Background of Invention

The discussion of the background to the invention that follows is intended to facilitate an understanding of the invention. However, it should be appreciated that the discussion is not an acknowledgement or admission that any aspect of the discussion was part of the common general knowledge as at the priority date of the application.

The present applicant has developed different forms of rock bolts in the past and examples of these bolts are provided in Australian Patent Nos 2016363530, 2018265326, 2010223134 and 2015273708. Rock bolts according to these patents have been used for ground support over many years and have been proven to provide efficient and reliable anchorage within rock strata. These bolts generally employ a split tube with an expander mechanism located internally at a leading end of the tube and an anchor arrangement at the opposite or trailing end. The rock bolts are usually inserted by percussion hammering into a hole that has been pre-drilled to be slightly smaller than the outside diameter of the split tube and the expander mechanism is activated once the rock bolt has been inserted into the hole to increase the frictional engagement of the tube with the facing wall of the hole, particularly at the leading end of the rock bolt.

The expander mechanism is usually connected to the anchor arrangement by a rod that extends from the anchor arrangement and through the tube to the expander mechanism. The expander mechanism is usually attached to a threaded end of the rod. The opposite end of the rod at the anchor arrangement can have a fixed nut and in these arrangements, the expander mechanism is activated by rotating the nut to rotate the rod to shift the expander mechanism in a manner that causes it to expand. The opposite end of the rod can alternatively be threaded and a nut can be rotated on the thread so that the rod is retracted within the tube and by that retraction, the expander mechanism is activated.

The anchor arrangement usually includes a rock plate that is pressed against the face of the rock about the hole by the nut when the nut is tightened to activate the expander mechanism. The rock plate applies a compressive force to the rock face which resists displacement of the rock strata. During a rock displacement in installations that employ the rock bolts of Australian Patent Nos 2016363530 and 2018265326, the anchor arrangement can move away from the trailing end of the tube beneficially allowing further expansion of the expander mechanism (if possible). Movement of the anchor arrangement will also increase the tensile load on the rod, which can cause the rod to elongate. Rod elongation beneficially absorbs dynamic loading on the bolt, but if the loading is sufficient to reach the limit of elongation, the rod will fail.

In rock bolts according to Australian Patent Nos 2010223134 and 2015273708, a ring is welded about the outside surface of the trailing end of the tube and the rock plate engages the ring. These rock bolts operate differently during rock displacement to bolts according to Australian Patent Nos 2016363530 and 2018265326, because the anchor arrangement cannot move away from the trailing end of the tube given the engagement between the ring that is fixed to the tube and the rock plate. In these rock bolts, tensile load during rock displacement is beneficially shared by the rod and the tube so that a lighter weight rod can be employed. However, in these rock bolts, there is no opportunity for further expansion of the expander mechanism or rod elongation during rock displacement. In these bolts, if the loading is sufficient, the tube and the rod can fail.

Failure of the rod in the above forms of rock bolts can result in a portion of a rod being ejected from the installation hole. This present obvious safety issues for personnel and equipment within a mine environment with the potential for personnel and equipment being struck by the ejecting rod portion. Accordingly, rock bolts have employed arrestment arrangements in order to arrest an ejecting rod portion from complete ejection from a hole in which a rock bolt is installed.

One example of an arrestment arrangement is disclosed in WO201855536 in which the rod of the bolt has a reduced diameter end portion in the region of the trailing end of a split tube and which is adjacent a greater diameter rod portion. A sleeve is fitted to the reduced diameter end portion and the sleeve can abut against an end of the greater diameter rod portion where the rod transitions between the reduced and greater diameter portions. The sleeve is a loose fit about the reduced diameter portion and so is free to move along the reduced diameter end portion. The reduced diameter end portion of the rod is located in a portion of the rod that would separate from the main portion of the rod if the rod fails. That rod portion would thus have adjacent greater and reduced diameter portions, with the sleeve located on the reduced diameter portion. If a rod portion starts to eject, the rod portion will travel through the sleeve until the sleeve abuts against the greater diameter portion of the rod portion. The sleeve will then travel with the rod portion and will be pushed towards the trailing end of the tube. The trailing end of the tube includes an abutment that the sleeve eventually engages and that engagement arrests movement of the sleeve and thus the rod portion. The rod portion is thus prevented from complete ejection from the rock bolt.

In WO201855536, the abutment at the trailing end of the tube is a ring that is welded to the outside of the tube. Advantageously, welding the ring to the outside of the tube means that there is no impediment to insertion of the rod into the trailing end of the tube during assembly of the rock bolt. However, the sleeve has to be inserted from the leading end as it cannot be inserted into the tube past the welded ring.

Other rock bolts that employ arrestment arrangements are disclosed in Australian patent 2015273708 and in Australian patent 2019202781.

Australian patent 2015273708 includes a restrainer member that fits closely about the rod and that extends through the split in the tube to engage the facing wall of a hole that the rock bolt is inserted into. The tube of the rock bolt has a weakened region at the trailing end so that when the bolt is loaded sufficiently, the tube will fail at the weakened region. While this could ordinarily allow ejection of the trailing end of the rock bolt, this is prevented by the restrainer member gripping both the facing wall of the hole and the rod so that the restrainer member is secured by engagement with the facing wall of the hole and the rod is secured against ejection from the hole by engagement with the restrainer member. The restrainer member of Australian patent 2015273708 functions satisfactorily, although there is some complexity to its assembly. The assembly also grips the rod relatively tightly resulting in a reduction of the machine torque available for expanding the expander mechanism.

Australian patent 2019202781 employs a stopping member that is welded to the trailing edge of the rock bolt tube. The stopping member is a disc that has a central opening through which the rod of the rock bolt extends. The rock bolt has swaged portions that cannot fit through the central opening and so if the rod fails, the portion that might otherwise eject is caught when the swaged portions engage the stopping member about the central opening.

### Summary of Invention

According to the present invention there is provided a rock bolt comprising;
an elongate, generally circular tube, the tube having a leading end and a trailing end,
an expander mechanism disposed within the tube in the region of the leading end,
an elongate tendon disposed longitudinally within the tube and in connection at or towards a first end of the tendon with the expander mechanism and in connection at or towards a second and opposite end of the tendon with an anchor arrangement positioned at the trailing end of the tube,
the tendon having a projection that extends radially and that is positioned between the expander mechanism and the anchor arrangement and the tube having a catch, the catch having an opening through which the tendon extends and the projection having a radial dimension too great to pass through the opening,
characterised in that the catch is fixed in position within the tube between the tendon projection and the trailing end of the tube.

In most forms of a rock bolt according to the present invention, the tendon will be a bar or rod, typically a steel rod, and the length of the rod can be in the region of 1m to 4m. The rod can have ribs applied to the outside surface and can have a nut fixed to one and a thread at the other end. While the tendon can alternatively be a cable that is flexible, it is expected that the invention will mainly be used with rock bolts that employ steel rods.

A rock bolt according to the present invention has a catch that is fixed in position within the tube so that the catch is inboard of the trailing edge of the rock bolt tube. As will be evident from the discussion that follows, a rock bolt according to the present invention allows the rod and associated components to be inserted through the trailing end of the tube, rather than the leading end. This is preferred as it makes assembly of the rock bolt much easier.

The catch can be a ring. The ring can be a complete ring or split ring. A split ring has the advantage of being able to be reduced in diameter for insertion into the interior of the tube and two thereafter resiliently expand within the tube. This makes insertion easier and allows the ring expand into firm engagement with the interior surface of the tube, prior to being fixed to the tube.

The wall of the ring can be of any suitable shape, such as circular, square or rectangular.

The opening of the catch can be of any suitable shape. For example, the opening can be circular and thus of constant diameter, or it can be non-circular, such as oval, or square or rectangular.

The opening of the catch can have an axis which is generally coaxial with the axis of the tube. It is expected that in some forms of the invention, the catch will be a circular ring and the axis of the ring will be coaxial with the axis of the tube.

Alternatively, where the catch is a ring, the axis of the ring can be disposed at an angle to the axis of the tube. In some forms of the invention, the ring will be mounted within the tube at an angle to the axis of the tube. By mounting the ring at an angle to the axis of the tube, the opening presented for travel of the tendon is reduced so that there is less space available for the projection of the tendon to pass through the opening. This can allow the projection to be a smaller projection than if the ring is mounted coaxial to the axis of the tube.

Moreover, by mounting the ring at an angle to the axis of the tube, the ring can project further into the interior of the tube towards the axis of the tube, than if the ring is mounted generally coaxial with the tube axis. For example, if the cross-section of the wall of the ring is rectangular, and if the ring is mounted generally coaxial with the tube axis, then the wall of the ring will extend generally parallel to the wall of the tube. However, if this type of ring is mounted at an angle to the axis of the tube, then the wall of the ring will extend inwardly of the tube wall. By selecting the dimensions of the ring, the ring wall can extend into the tube so that it engages the side wall of the rod even before the projection engages the ring. This engagement can assist to arrest ejection of a rod portion from a hole in which a rock bolt is installed.

The catch can be fixed in position within the tube in any suitable manner. For example, the catch can be fixed by welding or brazing. The catch can be fixed to an inside surface of the tube. In some forms of the invention, the tube will have a longitudinal slot or split and the catch is fixed, such as by welding, to one or both of the opposed edges of the slot. This makes welding of the catch within the tube easy because the slot gives access to the catch within the tube while connection of the catch to the tube at only one or, more preferably two positions is sufficient for the catch to be firmly fixed within the tube. In addition, fixing of the catch at one or both edges of the slot does not require any part of the catch or the fixing medium to extend out of the tube and so in this form of the invention, the catch is fixed in a manner that does not form any impediment to the insertion of the rock bolt into a hole.

If the catch is fixed to each side of the slot, the slot will not be able to contract or expand in the region of the catch, although if that is required, then the catch can include a break or opening, such as a split, so as not to bridge across the tube slot and the break or opening can open or close to allow the tube to expand or contract.

The catch can be secured in place by welding as discussed above, or in alternative arrangements of the invention, a connector can be employed to connect the catch to the inside of the tube. The connector can take any suitable form. In some forms of the invention, the connector is an elongate finger or post (hereinafter "post") that is connected to the tube and that extends longitudinally of the tube. The catch can be attached to the post to connect the catch to the tube. The post can be connected to the tube at one end and can be free at the opposite end so that the free end can pass through the opening in the catch so as to mount the catch on the post.

In some forms of the invention, the post has a trailing end that is welded to the tube and a leading end that is free from connection with the tube. In forms of the invention where the tube has a longitudinal slot or split the trailing end can be welded to the tube to one or both of the opposed edges of the slot.

In other forms of the invention, the post can be cut from a solid wall of the tube, so that the trailing end of the post is integral with the wall of the tube and the post is pushed inwardly of the tube, out of the plane of the tube wall so that a free end of the post can be presented to extend through the opening in the catch, thus securing the catch in place within the tube. The post can be cut from the wall of the tube by known metal cutting techniques, or by stamping.

Other arrangements for attaching a post to the tube can be employed, such as by attaching a post with a rivet connection.

Where a post is employed to attach the catch within the tube, the post can be configured so that once the catch is connected to the post, the catch is not easily released from the post. The post can thus be bent or formed into a shape having a region that is spaced apart from the internal tube wall that accommodates the wall of the catch, such as in a central part of the post, and regions on either side that extend or are bent back in towards or to the wall of the tube to resist disconnection of the catch from the post. The region can form a recess to accommodate the wall of the catch. In these arrangements, the free end of the post can be temporarily displaced away from the wall of the tube to allow the catch to be fed onto the post whereafter the post can resiliently return or be deformed (bent) to a position in which the free end is adjacent to or in connection with the wall of the tube.

In other forms of the invention, the catch can comprise first and second axially spaced catch members, each of which is fixed in position within the tube between the tendon projection and the trailing end of the tube. Each of the first and second catch members can include openings that are coaxial with each other and with the axis of the tube, and the openings have misaligned keys to accept the projection of the tendon, so that the projection of the tendon fits through the first catch member in one axially rotated orientation and fits through the second catch member in a second and different axially rotated orientation. In these forms of the invention, the tendon of the rock bolt can be inserted into the tube through the trailing end of the tube by orienting the tendon in a first position so that the projection is aligned with the key of the opening of the first catch member and once the projection has passed through the opening of the first catch member, the tendon can be axially rotated so that the projection is aligned with the key of the opening of the second catch member. Once the projection has passed through the opening of the second catch member, the tendon can be then pushed fully into the tube.

The advantage of the above arrangement is that ejection of a trailing end portion of the tendon from the rock bolt is arrested by the projection of the tendon engaging against the second catch member. That engagement will occur as long as the projection of the tendon is not aligned with the key of the second catch member. It is not expected that the projection of the tendon will precisely align with the key of the second catch member during ejection of a trailing end portion of the tendon, except very rarely. In those rare occasions, the projection of the tendon will pass through the second catch member, but because the key of the first catch member is rotationally displaced from the key of the second catch member, the projection will catch on the first catch member and the ejecting portion of the tendon will be arrested.

The first and second catch members can be fixed in position within the tube by any suitable arrangement, although it is expected that the catch members will be most conveniently fixed by welding. The first catch member can be fixed at the trailing end of the tube, either slightly inboard of the trailing edge of the tube, or flush with the trailing edge. In either case, good access to the first catch member is provided for welding.

The second catch member can be welded also, and where the tube has a longitudinal slot or split, the second catch member can be welded to one or both of the opposed edges of the slot. This makes welding of the second catch member within the tube easy because the slot gives access to the second catch member for welding, while connection of the second catch member to the tube at only one or, more preferably two positions, is sufficient for the second catch member to be firmly fixed within the tube and for the strength of that connection to be sufficient for the second catch member to arrest ejection of a rod portion.

Where the invention employs first and second catch members, the projection of the tendon is necessarily shaped to pass through the opening and key of each of the catch members and so the projection of the tendon will be axially asymmetrical. For this, the tendon can be swaged to form a bulge in the tendon that extends to either side of the tendon and the first and second catch members can each include a generally circular opening in which the periphery of the opening is interrupted to form a pair of opposed key sections that accommodate the bulge sections of the tendon.

Alternatively, the projection of the tendon could be an additional component that is fitted to the tendon such as by welding or crimping. The additional component could be a ring that fitted to the tendon by welding or crimping. Fitting by crimping is a simple attachment mechanism that is particularly appropriate where the tendon is formed as a rod with longitudinal ribbing.

Alternatively, the projection of the tendon could be an attachment that is attached to the tendon. This form of the invention is particularly applicable to tendons formed as ribbed bars, whereby the attachment grips the outer surface of the bar securely by interaction with the ribs. The attachment can be formed of an elastic material and include an opening for accepting the bar and a slot in the opening that allows it to be opened for fitting to the bar and so that it can resiliently close about the bar. The attachment can be formed in a U-shape.

Where the tube has a longitudinal slot or split, the attachment beneficially can be formed to be inserted through the slot, so that the bar can be fully installed in the tube before the attachment is attached to the bar.

The attachment can have a tapered end to ensure entry of the attachment into the opening of the catch and movement of the bar is arrested by the tapered end jamming within the opening.

### Brief Description of Drawings

In order that the invention may be more fully understood, some embodiments will now be described with reference to the figures in which:
Figures 1 and 2 prior art figures taken from Australian Patent No 2015273708.
Figure 3 is a cross sectional view of the trailing end of a rock bolt according to one embodiment of the present invention.
Figure 4 is a cross sectional view of the trailing end of a rock bolt according to another embodiment off the present invention.
Figure 5 illustrates a section of a rock bolt bar and an attachment attached to the bar.
Figure 6 is a cross sectional view taken through the attachment and bar of figure 5.
Figure 7 is a cross sectional view of the trailing end of a rock bolt according to another embodiment off the present invention.
Figure 8 is a perspective view of a section of the rock bolt of Figure 7.
Figure 9 is a perspective, cutaway view of a modified section of the rock bolt of Figure 7.
Figure 10 is a perspective view of the trailing end of a rock bolt according to another embodiment of the present invention.
Figure 11 is a cross sectional view taken through a bar suitable for use in the rock bolt of Figure 10.

### Detailed Description

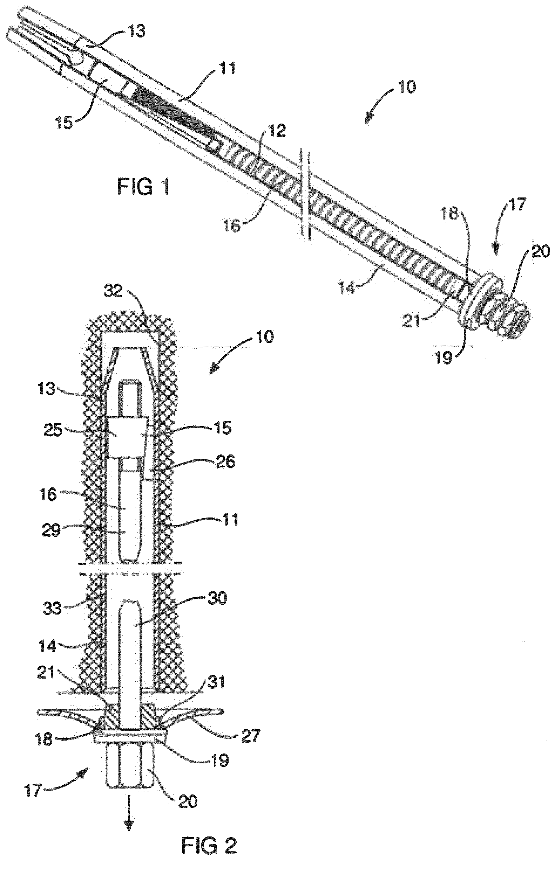

Figures 1 and 2 show a rock bolt according to Australian Patent No 2015273708 and known in the industry as the MD rock bolt. Figure 1 is a perspective view of the rock bolt 10 and shows an elongate, generally circular tube 11, which includes a longitudinal split 12 which enables the tube 11 to be radially expanded. The tube 11 has a leading end 13 and a trailing end 14. An expander mechanism 15 is disposed within the tube 11 in the region of the leading end 13 and is operable to apply a load which tends to expand at least the leading end 13 of the tube 11 radially. The expander mechanism 15 is shown as including wedge arrangements that include at least a pair of wedge elements that expand as they move relative to one another.

The rock bolt 10 further includes a tendon in the form of a ribbed bar 16 that is disposed longitudinally within the tube 11 and which is connected at one end with the expander mechanism 15 and at the other end with an anchor arrangement generally designated by the reference numeral 17. In some forms of rock bolts, the end of the bar 16 that is connected to the anchor arrangement 17 is connected by a wedge arrangement.

The anchor arrangement includes a ring 18 that is welded to the trailing end 14 of the tube 11, a washer 19, a nut 20 that is threaded onto the trailing end of the bar 16 and a centering plug 21. The nut 20 is a blind nut that threads onto the end of the bar 16, but once the nut 20 is fully rotated onto the end of the bar, the nut will not rotate further relative to the bar 16. Accordingly, further rotation of the nut 20 causes the bar 16 to rotate. By this arrangement, rotation of the nut 20 in one direction rotates the bar 16 in a direction that causes the expander mechanism 15 to expand.

A schematic cross-section of the rock bolt 10 is illustrated in Figure 2. In Figure 2, the expander mechanism is shown to comprise a pair of wedge elements 25 and 26. The wedge element 25 is threadably connected to the bar 16 while the wedge element 26 is fixed to the inside surface of the tube 11, such as by welding. It will be appreciated that movement of the wedge element 25 relative to the wedge element 26 downwardly in the orientation of the rock bolt 10 of Figure 2 will result in expansion of the expander mechanism 15 to cause radial expansion of the tube 11 at least in the region of the expander mechanism 15. Movement of the wedge element 25 relative to the wedge element 26 downwardly is by rotation of the bar 16 by rotating the nut 20.

Figure 2 also illustrates a rock plate 27, that rests against the inside surface of the ring 18. The weld shown in Figure 2 is between the ring 18 and the tube 11.

The cross-sectional view of the rock bolt 10 of Figure 2 is modified from that shown in Figure 1 to show failure of the rock bolt 10 at three positions. Firstly, the tube 11 has failed adjacent the ring 18. Secondly, the bar 16 has failed and now comprises separated leading and trailing parts 29 and 30. Thirdly, the tube 11 has failed adjacent the free end of the bar part 29. Failure of that kind often occurs when the bar 16 fails. Because of the first and second failures, the portion of the rock bolt 10 that comprises the trailing part 30 of the bar 16, the anchor mechanism 17, a small portion 31 of the tube 11 and the rock plate 27 can all be ejected under load from the bore 32 within which the rock bolt 10 is inserted. The present invention aims to arrest ejection of the trailing part 30 of the bar 16 and the associated components.

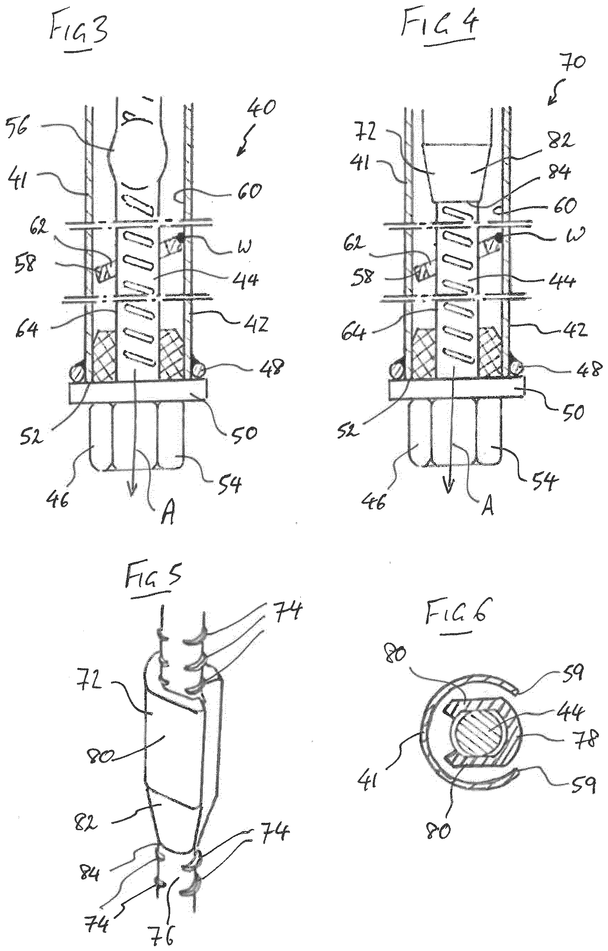

Figure 3 is a cross-sectional view of the trailing end of a rock bolt 40 of similar construction to the rock bolts of Figures 1 and 2 according to one embodiment of the invention. The rock bolt 40 of Figure 3 has an elongate, generally circular tube 41 of which only the trailing end 42 is shown. An elongate tendon in the form of a ribbed bar 44 is disposed longitudinally within the tube 41 and extends between an expander mechanism (not shown) at the leading end of the tube 41 and an anchor arrangement 46 at the trailing end 42 of the tube 41.

The anchor arrangement 46 includes a ring 48 that is welded to the outside surface of the tube 41, a washer 50 that bears against the ring 48 and the trailing edge 52 of the tube 41 and a nut 54 that is fixed to the bar 44 so that rotation of the nut 54 rotates the bar 44. A rock plate (not shown) would ordinarily be applied to the trailing end 42 of the tube 41, with the rock plate bearing against the ring 48 in the manner shown in Figure 2.

The bar 44 has having a projection 56 which is a portion of the bar 44 that is swaged to form a bulge in the tendon that extends to either side of the tendon in the orientation of the bar 44 shown in Figure 3. Swaging increases the diameter of the bar 44 in one plane (as shown in Figure 3) and decreases it in the perpendicular plane.

The rock bolt 40 further includes a catch in the form of a ring 58. While the ring is only shown in cross- section, the ring 58 is a complete circle having a generally constant diameter (inside and outside) and a generally constant wall thickness.

The plane of the ring 58 is shown at an angle to the lengthwise axis of the bar 44. Moreover, the ring 58 is shown attached to the inside surface 60 of the tube 41 by spot welding at weld W. The ring 58 can be welded to the inside surface 60 at one point only. However, where the tube has a longitudinal slot or split (as shown in Figure 1 at item 12), the ring 58 can be welded to one or both of the opposed edges of the slot. Figure 6 is a cross-sectional view of a further embodiment of the invention that will be described later herein, but Figure 6 shows the tube 41 in cross-section and shows the opposed edges 59 of the longitudinal slot that is formed in the tube 41. This makes welding of the ring 58 within the tube 41 easy because the slot gives access to the ring 58 for welding.

The ring 58 has an opening 62 through which the bar 44 extends and radial dimension of the projection 56 is swaged to be too great to pass through the opening 62. The ring 58 is thus operable to arrest movement of the bar 44 once the projection 56 engages the ring 58. With reference to Figure 2, by adopting the arrangement shown in Figure 3, the trailing part 30 of the bar 16 and the associated components would be arrested following failure of the bar 16.

Advantageously, the ring 58 is fixed in position within the tube 41 between the projection 56 and the trailing end 42 of the tube 41, so that the ring 58 is inboard of the trailing edge 52. This allows the bar 44 to be caught by the ring 58 much earlier than compared to prior art arrangements, such as Australian patent 2019202781, in which a stopping member is welded to the trailing edge of the rock bolt tube and not inboard of the trailing edge.

Moreover, by mounting the ring 58 at an angle to the axis of the tube 41 and the bar 44, the wall of the ring 58 projects further into the interior of the tube 41 towards the axis of the tube 41, than if the ring 58 were to be mounted generally coaxial with the tube 41. This reduces the amount of the opening 62 that is available for the projection 56 to pass through and so the projection 56 can be of reduced diameter. Also, by mounting the ring 58 at an angle to the axis of the tube 41, the ring 58 can be made to engage the side wall 64 of the bar 44 as the bar 44 ejects from the tube 41 thus providing further assistance to arrest ejection of the bar 44.

While the ring 58 is shown attached to the tube 41 at an angle to the lengthwise axis of the tube 41 and the bar 44, the ring 58 can alternatively be attached so that the axis of the opening 62 is generally coaxial with the axis of the tube 41 and the bar 44. In these forms of the invention, the plane of the ring 58 will extend generally perpendicular to the axis of the tube 41 and the bar 44. If this arrangement is employed, the diameter of the projection 56 needs to be greater than in the arrangement of Figure 3 to ensure that the projection 56 cannot fit through the opening 62, noting that the area available in the opening 62 reduces as the ring 58 is inclined.

Figure 4 illustrates in cross-sectional view, a rock bold 70 which is configured in the same way as the rock bolt 40 of Figure 3, with the exception that instead of the bar 44 having a swaged projection 56, an attachment 72 is attached to the bar 44 to increase the diameter of the bar 44 above the ring 58. Because many of the components of the rock bolt 70 are the same as the rock bolt 40, the same reference numerals used for the same components.

The attachment 72 and the bar 44 are illustrated in isolation in Figure 5. Figure 5 shows that the bar has a plurality of raised ribs 74 that project radially outwardly from the outer surface 76 of the bar 44. The attachment 72 is formed of an elastic material that allows it to be opened for fitting to the bar 44 and so that it can resiliently close about the bar 44. Figure 6 is a cross-sectional view through the tube 41, the attachment 72 and the bar 44. This figure shows that the attachment 72 is formed to have a U-shape, with a curved base 78 and a pair of sides 80. The attachment 72 is open opposite the base 78 and given the elasticity of the attachment 72, the sides 80 can be spread apart for fitting about the bar 44 and thereafter return to the position shown in Figures 5 and 6 in which each of the sides 80 and the base 78 grip the outer surface 76 of the bar 44, in particular gripping the raised ribs 74. By this gripping action, the attachment 72 retains its position on the bar 44 without shifting axially along the bar 44.

The attachment 72 has a tapered end 82 to ensure entry of the attachment 72 into the opening 62 of the ring 58 if the bar 44 fails. Accordingly, the leading end 84 of the tapered end 82 is of a smaller diameter than the opening 62 of the ring 58. However, the tapered end 82 increases in diameter away from the leading end 84 so that once the tapered end 82 enters the opening 62 it will jam within the opening 62 at a position above the leading end 84. The attachment 72 side needs to jam within the opening 62 before the straight sides 80 reach the opening 62.

The attachment 72 is securely fixed to the bar 44 in the positions shown in Figures 4 and 5. In operation, the rock bolt 70 operates in the same manner as the rock bolt 40, such that if the bar 44 fails and commences ejection from the tube 41, the attachment 72 will shift with the bar 44 so that the tapered end 82 of the attachment 72 enters the opening 62 of the ring 58 thus arresting further ejection of the bar 44.

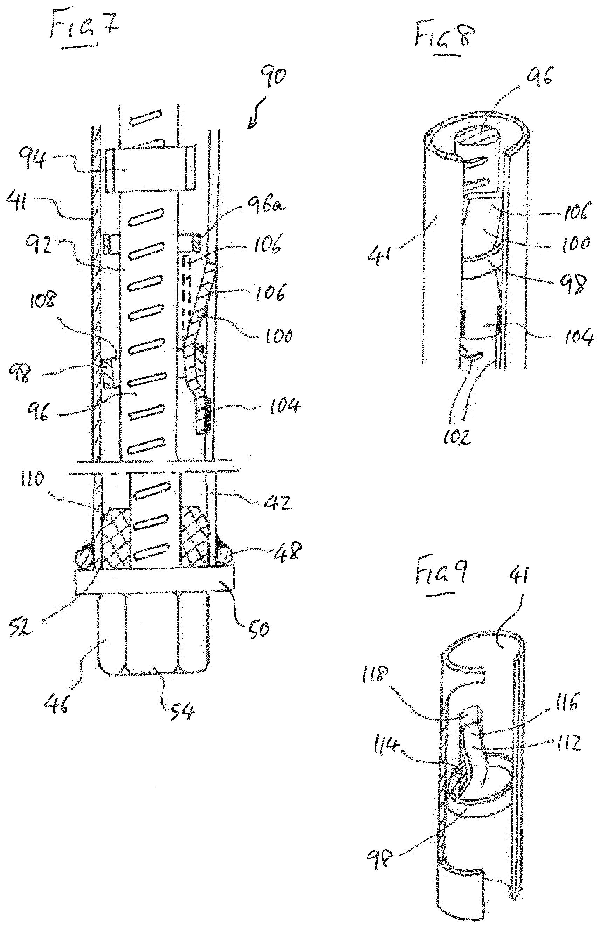

Figures 7 and 8 show a further embodiment of the present invention and as with Figures 3 and 4, there are common components between the rock bolts 40 and 70 of Figures 3 and 4 and the rock bolt 90 of Figures 7 and 8. Accordingly, the same reference numerals used for the same components.

Figure 7 Illustrates the rock bolt 90 as including a ribbed bar 92 that has a projection 94 connected to it by crimping. The projection 94 is thus formed as a ring and is fitted onto the bar 92 and is crimped onto the bar 92 at an appropriate position. Crimping of the projection 94 causes the projection 94 to grip the ribbed outer surface 96 of the bar 92.

The rock bolt 90 includes a catch that comprises a ring 98 and a ring connector 100. Figure 8 shows that opposite side edges of the connector 100 are welded to opposite side edges 102 of a longitudinal slot formed in the tube 41.

The connector 100 is shown in an operational condition in Figures 7 and 8. In those figures, the trailing end 104 is welded to the tube 41 while the leading end 106 extends into the slot between the opposite edges 102. Between the trailing and leading ends 104, 106, the connector 100 bends inwardly and extends through the of the ring 98. The ring 98 can be a loose fit on the connector 100.

Prior to the connector 100 being placed in the operational condition of Figures 7 and 8, the leading end 106 can be positioned within the tube 41 in an assembly condition, so that the leading end 106 does not extend into the slot between the opposite edges 102. An example position of the leading end 106 is shown in broken lines in Figure 7. In that position, the ring 98 can be fitted onto the connector 100 and thereafter, the leading end 106 of the connector 100 can be bent into the operational condition shown Figures 7 and 8. This arrangement means that the ring 98 can be fitted to the bar 92 and with the connector 100 in the assembly condition shown in broken lines, the ring 98 can be shifted past the leading end 106 of the connector 100 such as to the position shown by the ring 96a and the ring 96a can the lowered onto the connector 100. The leading end 106 of the connector 100 can then be bent to the operational condition and the ring 98 is then securely located within the tube 41 relative to the bar 44 against release from the connector 100.

The arrangement of Figures 7 and 8 advantageously allows the ring 98 to be fitted onto the bar 92 prior to the projection 94 being fitted onto and crimped to the 92. Thus, the bar 92 can be assembled, for example, by fitting the components in the order of the nut 54, centering plug 110, the ring 98 and the projection 94. The projection 94 can be crimped to the bar 92. The expander mechanism can then be fitted to the opposite end of the bar 92 and the entire bar 92 can be inserted into the tube 41 from the trailing end of the tube 41. This is different to the arrangement of Figure 3, in which if the ring 58 is welded in place before the bar 44 is installed in the tube 41, the bar 44 has to be inserted into the tube 41 from the leading end (because the projection 56 cannot fit through the opening 62 in the ring 58 to install the bar 44 from the trailing end of the tube 41) and fed through the ring 58 before being connected to the nut 54. Fitting the ring 58 to the bar 44 before welding the ring 58 to the tube 41 is difficult and carries with it the risk that there will be heat damage to the bar 44 that might compromise the performance, specifically the load carrying performance of the bar 44. This is a more difficult installation, because it is difficult to connect the nut 54 to the bar 44 when the bar is within the tube 41, because the bar 44 needs to be held against rotation while the nut is being attached and access to the bar 44 to do this while the bar 44 is within the tube 41, is limited.

The rock bolt 70 is also constructed in a manner that allows the bar 44 to be inserted from the trailing end of the tube 41 because the attachment 72 can be fitted to the bar 44 through the longitudinal slot of the tube 41 after the bar 44 has been fitted into the tube 41.

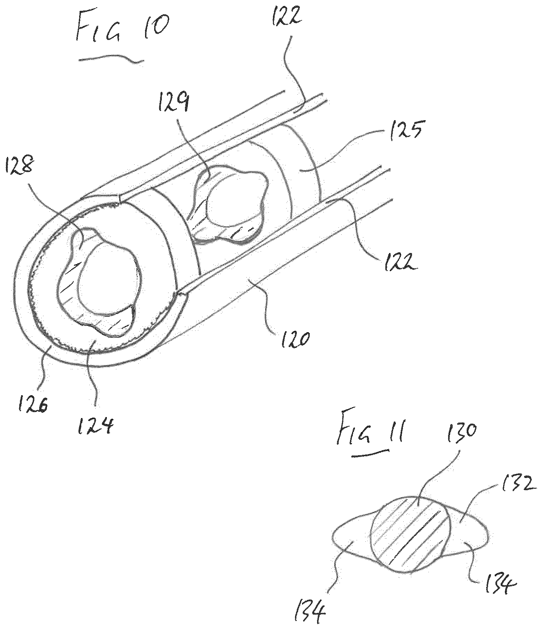

A further embodiment of the invention is illustrated in Figures 10 and 11. Figure 10 illustrates a section of a rock bolt tube 120 that has a longitudinal split defined by opposing edges 122. The section of the tube 120 that is shown in Figure 10 is a trailing end section that would be adjacent the nut 54 of the earlier figures.

In Figure 10, a catch is illustrated of a form that has first and second axially spaced catch members in the form of a pair of discs 124, 125. The discs 124, 125 are welded into a spaced apart position within the tube 120 so that there is a gap between them. The disc 124 is welded to the tube 120 adjacent the trailing edge 126 and so the weld can extend about the circumference of the disc 124 except in the region of the longitudinal split. The disc 125 is less easily welded about the majority of its circumference because of its position inboard from the trailing edge 126 and so the disc 125 can be welded to one or both of the opposed edges 122 of the longitudinal split.

The discs 124, 125 each include non-circular openings 128, 129 through which a bar of a rock bolt can extend. The openings 128, 129 are coaxial with each other and with the axis of the tube but are shaped to have misaligned keys or keyways. The openings 128, 129 are shaped to correspond to the projection of a bar that is to be inserted into the tube 120. For this embodiment, the projection is non-circular or asymmetrical, so that the projection can only pass through the openings 128, 129 when the projection is in a particular angular orientation. Moreover, because the openings 128, 129 are misaligned once the projection has passed through the opening 128 of the disc 124, the bar must be rotated for the projection to pass through the opening 129 of the disc 125.

Once a rock bolt is assembled with the discs 124, 125 welded in position, a bar can be inserted through the trailing end of the tube 120 by aligning the projection of the bar with the opening 128 of the disc 124. Once the projection has passed through the opening 128, the bar is rotated to align with opening 129 of the disc 125 Once the projection has passed through the opening 129 of the disc 125, the bar can be pushed fully into the tube 120.

The advantage of the Figure 10 arrangement is that ejection of a trailing end portion of a bar from a rock bolt is arrested by the projection of the bar engaging against the disc 125. That engagement will occur as long as the projection of the bar is not aligned with the opening 129 of the disc 125. However, in the unlikely event that the projection of the bar is aligned with the opening 129 of the disc 125 and can thus pass through the opening 129, the projection of the bar will still be misaligned with the opening 128 of the disc 124. The projection will engage against the disc 124 and further ejecting movement of the bar will be arrested.

Figure 9 illustrates a modification to the Figures 7 and 8 arrangement whereby the connector 100 of Figures 7 and 8 is formed integrally with the tube 41 rather than being a separate component that is welded to the tube 41. In Figure 9, the connector 112 is cut from the wall of the tube 41, such as by laser cutting, and the cut section is bent in the manner shown to form a recess 114 that can accommodate the wall of the ring 98.

The Figure 9 modification operates in the same way as the rock bolt 90 of Figures 7 and 8 and so the free end 116 of the connector 112 can be bent to extend into the interior of the tube 41 like the broken line section 106 of Figure 7 and once the ring 98 is fed onto the connector 112, it can be bent outwardly and into the slot 118 that is formed when the tube 41 is cut to form the connector 112.

The Figure 9 modification could have use in rock bolt tubes that are not longitudinally split, or there could be advantages to the use of the Figure 9 modification by the absence of welding in the trailing end region of the tube 41.

The projection of the bar can have any suitable non-circular or asymmetrical shape. As one example, Figure 11 is a cross sectional view of a bar 130, looking from the leading end of the bar towards the trailing end and shows a projection 132 having a pair of side "wings" 134 that project radially outwardly from opposite sides all the bar 130. The openings 128, 129 could be shaped to accommodate the circular part of the bar 130 and the wings 134, but requiring the bar 130 to be rotated through 90° for example after the projection 132 passes through the opening 128 and before it can pass through the opening 129. It will be appreciated, that if the bar 130 fails, the bar will move very quickly to engage the disc 125 and in the unlikely event that the projection 132 aligns with the opening 129 so that the projection 132 passes through the opening 129, the bar 130 will subsequently engage the disc 124 almost immediately and without enough time for the bar 130 to rotate through 90°. The likelihood therefore of the projection 132 passing through each of the openings 128, 129 is expected to be almost negligible.

Where any or all of the terms "comprise", "comprises", "comprised" or "comprising" are used in this specification (including the claims) they are to be interpreted as specifying the presence of the stated features, integers, steps or components, but not precluding the presence of one or more other features, integers, steps or components.

Those skilled in the art will appreciate that the invention described herein is susceptible to variations and modifications other than those specifically described. It is understood that the invention includes all such variations and modifications which fall within the spirit and scope of the present invention.

## Claims

1. A rock bolt (40) comprising;
an elongate, generally circular tube (41), the tube having a leading end (13) and a trailing end (42),
an expander mechanism (15) disposed within the tube in the region of the leading end (13),
an elongate tendon (44) disposed longitudinally within the tube (41) and in connection at or towards a first end of the tendon (44) with the expander mechanism (15) and in connection at or towards a second and opposite end of the tendon (44) with an anchor arrangement (46) positioned at the trailing end (42) of the tube (41),
the tendon (44) having a projection (56) that extends radially and that is positioned between the expander mechanism (15) and the anchor arrangement (46) and the tube (41) having a catch (58), the catch (58) having an opening (62) through which the tendon (44) extends and the projection (56) having a radial dimension too great to pass through the opening (62),
**characterised in that** the catch (58) is fixed in position within the tube (41) between the tendon projection (56) and the trailing end (42) of the tube (41).

2. A rock bolt (40) according to claim 1, the catch (58) being formed as a ring, such as a complete ring or split ring.

3. A rock bolt (40) according to claim 2, the ring (58) having an axis that is disposed at an angle to the axis of the tube (41).

4. A rock bolt (40) according to claim 2 or 3, the tube (41) having a longitudinal slot or split and the catch (58) being fixed, such as by welding, to one or both of the opposed edges (102) of the slot.

5. A rock bolt (90) according to claim 1, the catch (98) being fixed in position within the tube (41) by a connector (100) formed as a post that is connected to the tube (41) and that extends longitudinally of the tube (41) and the post (100) having an end (106) that is free from connection with the tube (41) and the catch (98) having an opening (108) and the post (100) extending into the opening (108) to connect the catch (98) to the tube (41).

6. A rock bolt (90) according to claim 5, the post (100) extending longitudinally of the tube (41) and having leading and trailing ends, the post (100) being connected to the tube (41) at the trailing end and being free from connection with the tube at the leading end (106).

7. A rock bolt (90) according to claim 5 or 6, the tube (41) having a longitudinal slot or split and the post (100) being connected to the tube (41) at the trailing end, such as by welding, to one or both of the opposed edges of the slot (102).

8. A rock bolt (90) according to claim 5 or 6, the post (100) being formed integrally with the tube (41) at the trailing end.

9. A rock bolt (90) according to any one of claims 5 to 8, the post (100) having a section (114) that is spaced apart from the internal tube wall and that accommodates the wall of the catch, such as in a central part of the post (100), and regions on either side that extend back in towards or to the wall of the tube.

10. A rock bolt (40) according to any one of claims 1 to 9, the projection (56) being a swaged section of the tendon (44), or a separate part (94) that is in crimped connection with the tendon (44).

11. A rock bolt (40) according to any one of claims 1 to 9, the tendon (44) being a ribbed bar and the projection (56) being formed as an attachment (72) formed from an elastic material, whereby the attachment (72) has an opening for accepting the bar (44) and a slot in the opening that allows it to be opened for fitting to the bar (44) and so that it can resiliently close about the bar (44).

12. A rock bolt (40) according to claim 1, the catch comprising first and second axially spaced catch members (124,125), each of which is fixed in position within the tube (41) between the tendon projection (132) and the trailing end of the tube, each of the first and second catch members (124,125) including openings (128,129) that are coaxial with each other and with the axis of the tube (41), and the openings (128,129) have misaligned keys or keyways to accept the projection (132) of the tendon (44), so that the projection (132) of the tendon (44) fits through the first catch member (124) in one axially rotated orientation and fits through the second catch member (125) in a second and different axially rotated orientation.

13. A rock bolt (40) according to claim 10, the first catch member (124) being fixed at the trailing end of the tube (120), either slightly inboard of the trailing edge (126) of the tube (120), or flush with the trailing edge (126), the tube (120) having a longitudinal slot or split and the second catch member (125) being welded to one or both of the opposed edges (122) of the slot.

14. A method of assembling a rock bolt (40),
a. the rock bolt (90) including an elongate tendon (92) which has an expander mechanism (15) at one end and an anchor arrangement (46) at the opposite end, a projection (94) formed on the bar (44) that extends radially and that is positioned between the expander mechanism (15) and the anchor arrangement (46) and a catch (98) that is positioned between the projection (94) and the anchor arrangement (46), the catch (98) having an opening (108) through which the tendon (44) extends and the projection (94) having a radial dimension too great to pass through the opening (108), a connector (100) fixed to the tube (41) for holding the catch (100) in place within the tube (41),
the method including:
b. installing the tendon (92) into a rock bolt tube (41), the tube (41) having leading and trailing ends and the tendon (44) being installed through the trailing end (42),
c. moving the catch (98) in a first direction past the connector (100) and then moving the catch (98) in the opposite direction for the catch (98) to be caught by the connector (100).

15. A method according to claim 14, the connector (100) being formed as a post that is connected to the tube (41) and that extends longitudinally of the tube (41) and the post (100) having an end (106) that is free from connection with the tube (41), the free end (106) being in an assembly condition for the catch (98) to be moved in a first direction past the connector (100) and for the catch (98) to be moved in in the opposite direction for the catch (98) to be caught by the connector (100) and the method including moving the free end (106), such as by bending, to an operational position in which the catch (98) is securely located within the tube (41) against release from the connector (100).
